# EUROPEAN PATENT APPLICATION

(11) **EP 4 109 578 A1**
(43) Date of publication of application: **28.12.2022**
(21) Application number: 21757685.9
(22) Date of filing: 21.01.2021
(51) Int. Cl.: H01M 4/04, H01M 4/139, H01G 13/00

(54) **IMPURITY PROCESSING DEVICE AND IMPURITY PROCESSING METHOD**

(30) Priority: 21.02.2020 JP 2020028257
(71) Applicant: Panasonic Intellectual Property Management Co., Ltd., Osaka-shi, Osaka 540-6207 (JP)
(72) Inventor: NAKAI Miyuki, Osaka-shi, Osaka 540-6207 (JP); OGAWA Yuko, Osaka-shi, Osaka 540-6207 (JP); KUME Toshiro, Osaka-shi, Osaka 540-6207 (JP)
(74) Representative: Novagraaf International SA
(86) International application number: PCT/JP2021/001965
(87) International publication number: WO 2021/166535

(57) **Abstract**

An impurity processing device comprising piping that channels a metal-impurity-containing liquid subject to processing, a first electrode and a second electrode that are positioned in the piping, and a power supply unit for channeling a current between the first electrode and the second electrode.

## Description

### [TECHNICAL FIELD]

The present disclosure relates to an impurity processing device and an impurity processing method.

### [BACKGROUND ART]

When a solid-liquid mixture having electron conductivity is prepared, metal particles may be mixed as impurities. When the solid-liquid mixture is used for an electronic device, there is a possibility that defects of the electronic device are caused by the impurities. Examples of the electronic device include electric storage devices such as a lithium-ion battery, a lithium-ion secondary battery, an alkaline dry battery, an electric double layer capacitor, and an electrochemical capacitor. Examples of the solid-liquid mixture include electrode slurries used in these electric storage devices. When metal impurities are mixed in the electrode slurry, the metal impurities may cause a short circuit between positive and negative electrodes or the like. On the other hand, for example, Patent Literature 1 discloses a method for magnetically removing metal foreign substances contained in an aqueous slurry containing an electrode active material and a particulate binder.

### [Patent Literature]

### [Patent Literature 1] WO 2014/142045 A

### [SUMMARY OF INVENTION]

In the conventional method for removing the metal impurities using magnetism, impurities made of a nonmagnetic metal cannot be removed. Therefore, in the conventional method, a treatment rate of impurities is insufficient.

One aspect of the present disclosure is an impurity processing device. This device includes: a pipe through which a treated liquid containing metal impurities flows; a first electrode and a second electrode disposed in the pipe; and a power supply causing a current to flow between the first electrode and the second electrode.

Another aspect of the present disclosure is an impurity processing method. This method includes: causing a treated liquid containing metal impurities to flow through a pipe; and causing a current to flow to the treated liquid flowing through the pipe.

Any combinations of the above components and modifications of the expressions of the present disclosure among methods, apparatuses, systems, and the like are also effective as aspects of the present disclosure.

### [ADVANTAGEOUS EFFECTS OF INVENTION]

According to the present disclosure, a treatment rate of impurities in a treated liquid can be increased.

### [BRIEF DESCRIPTION OF DRAWINGS]

Fig. 1 is a schematic diagram of a coating apparatus including an impurity processing device according to a first embodiment.
Fig. 2A is a perspective view schematically illustrating an electrode portion.
Fig. 2B is a perspective view schematically illustrating an electrode portion.
Fig. 2C is a perspective view schematically illustrating an electrode portion.
Fig. 3A is a schematic diagram of an electrode portion included in an impurity processing device according to a second embodiment.
Fig. 3B is a schematic diagram of an electrode portion included in the impurity processing device according to the second embodiment.
Fig. 3C is a schematic diagram of an electrode portion included in the impurity processing device according to the second embodiment.
Fig. 3D is a schematic diagram of an electrode portion included in the impurity processing device according to the second embodiment.
Fig. 3E is a schematic diagram of an electrode portion included in the impurity processing device according to the second embodiment.
Fig. 3F is a schematic diagram of an electrode portion included in the impurity processing device according to the second embodiment.

### [DESCRIPTION OF EMBODIMENTS]

Hereinafter, the present disclosure will be described on the basis of preferred embodiments while referring to the drawings. The embodiments do not limit the present disclosure, but are exemplary, and all features and combinations thereof described in the embodiments are not necessarily essential to the present disclosure. The same or equivalent components, members, and processes illustrated in the drawings will be denoted by the same reference numerals, and repeated description will be omitted as appropriate. In addition, the scale or shape of each component illustrated in the drawings is set for the sake of convenience to facilitate the explanation and is not to be analyzed as limitative unless otherwise specified. In addition, when the terms "first", "second", and the like are used in the present specification or claims, such terms do not represent any order or degree of importance and are used to distinguish one configuration from another configuration, unless otherwise specified. In addition, in each drawing, some of members that are not important for describing the embodiment are omitted.

### First Embodiment

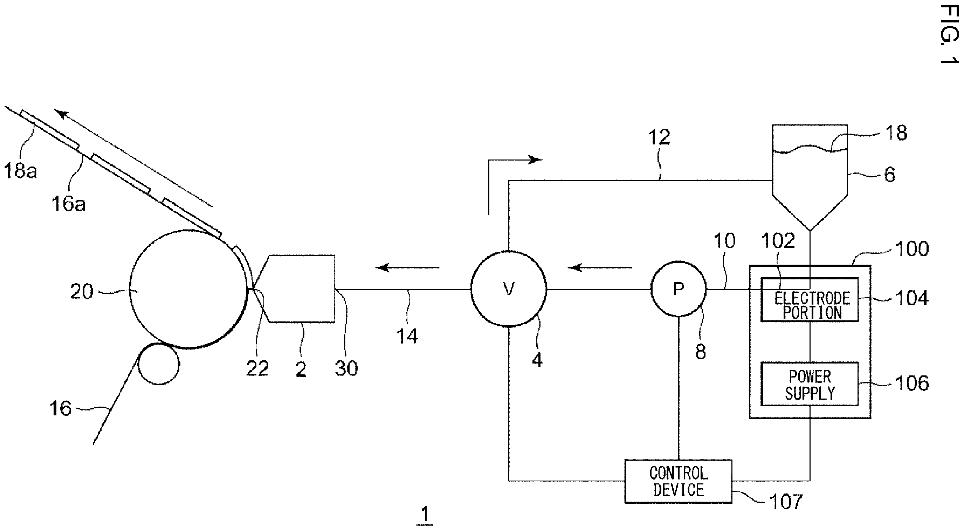

Fig. 1 is a schematic diagram of a coating apparatus including an impurity processing device according to a first embodiment. A coating apparatus 1 includes a coating die 2, a valve 4, a tank 6, a pump 8, a feed pipe 10, a return pipe 12, and a die supply pipe 14.

The coating die 2 is a tool for applying a coating material 18 to a coated material 16. As an example, the coating apparatus 1 of the present embodiment is used for manufacturing an electrode plate of a secondary battery. The electrode plate of the secondary battery is a sheet-shaped electrode material obtained by applying an electrode slurry to a current collector and drying the electrode slurry. Therefore, in the present embodiment, the coated material 16 is a current collector of the secondary battery, and the coating material 18 is an electrode slurry of the secondary battery. The current collector is, for example, a metal foil. The electrode slurry is an electron conductive solid-liquid mixture containing a solvent and an electrode active material. Alternatively, the electrode slurry is a solid-liquid mixture containing a solvent and a conductive assistant. In the case of a general lithium-ion secondary battery, a positive electrode plate is prepared by applying an electrode slurry containing a positive electrode active material such as lithium cobalt oxide or lithium iron phosphate on an aluminum foil. Note that a positive electrode slurry may contain a conductive assistant such as graphite. In addition, a negative electrode plate is prepared by applying an electrode slurry containing a negative electrode active material (or a conductive assistant) such as graphite on a copper foil.

The coating die 2 is disposed such that a discharge port 22 faces a circumferential surface of a backup roll 20 with a predetermined distance therebetween. The coated material 16 is continuously conveyed to a position where the backup roll 20 and the discharge port 22 face each other by the rotation of the backup roll 20.

The valve 4 is connected to the coating die 2 via the die supply pipe 14. The valve 4 can switch between supply and non-supply of the coating material 18 to the coating die 2. The coating apparatus 1 can discharge the coating material 18 from the coating die 2 to the coated material 16 while the coating material 18 is supplied to the coating die 2. The tank 6 is connected to the valve 4 via the feed pipe 10 and the return pipe 12.

The tank 6 stores the coating material 18. The feed pipe 10 includes the pump 8, and the coating material 18 is fed from the tank 6 to the valve 4 by driving of the pump 8. The valve 4 supplies the coating material 18 supplied from the tank 6 to the coating die 2 via the die supply pipe 14. Alternatively, the valve 4 returns the coating material 18 supplied from the tank 6 to the tank 6 via the return pipe 12.

The valve 4 supplies the coating material 18 to the coating die 2, so that the coating material 18 can be discharged from the coating die 2 to form an application portion 18a of the coating material 18 on the coated material 16. In addition, the valve 4 returns the coating material 18 to the tank 6, so that the application of the coating material 18 from the coating die 2 can be stopped to form a non-application portion 16a of the coating material 18 on the coated material 16. That is, intermittent coating of the coating material 18 can be performed on the coated material 16 by the valve 4. The non-application portion 16a is used for pasting of a center lead of an electrode or the like. Note that the configuration of each portion of the coating apparatus 1 is not limited to that described above.

The coating apparatus 1 includes an impurity processing device 100 according to the present embodiment. The impurity processing device 100 includes a pipe 102, an electrode portion 104, and a power supply 106. The pipe 102 is a flow path through which a treated liquid containing metal impurities flows. In the present embodiment, a region of the feed pipe 10 between the tank 6 and the pump 8 constitutes the pipe 102. That is, the impurity processing device 100 is provided in the feed pipe 10. The coating material 18, in other words, the electrode slurry containing the solvent and the electrode active material and/or the conductive assistant corresponds to the treated liquid.

Note that the impurity processing device 100 may be provided in a region of the feed pipe 10 between the pump 8 and the valve 4. The impurity processing device 100 may be provided in the return pipe 12, the die supply pipe 14, or the like. Further, the coating apparatus 1 is not limited to an apparatus for manufacturing an electrode plate of a secondary battery, and the coated material 16 and the coating material 18 may not be an electrode plate and an electrode slurry. Further, the impurity processing device 100 may be provided in an apparatus other than the coating apparatus 1, for example, an apparatus for producing the treated liquid.

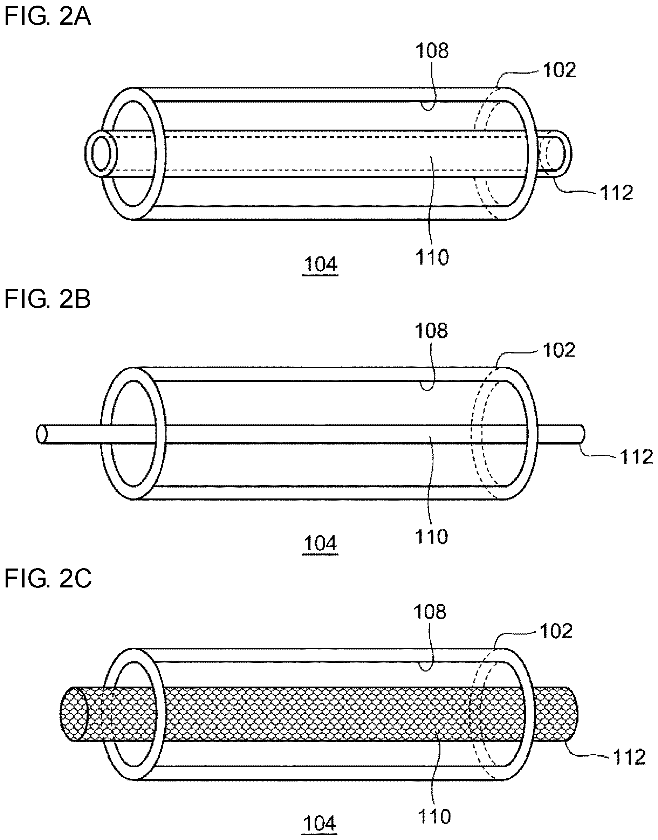

The electrode portion 104 includes a first electrode 108 and a second electrode 110. Figs. 2A to 2C are perspective views schematically illustrating the electrode portion 104. Fig. 2A is a first example of the electrode portion 104, Fig. 2B is a second example of the electrode portion 104, and Fig. 2C is a third example of the electrode portion 104. The first electrode 108 and the second electrode 110 are disposed in the pipe 102. The electrode portion 104 of the present embodiment has a rod-shaped body 112 inserted into the pipe 102. The first electrode 108 is provided on the pipe 102, and the second electrode 110 is provided on the rod-shaped body 112. The first electrode 108 and the second electrode 110 are insulated from each other.

The first electrode 108 and the second electrode 110 are made of a material having electrical conductivity. The material has, for example, a volume resistivity of 0.1 Ω·cm or less. Specific examples of the material constituting the first electrode 108 and the second electrode 110 include insoluble metals such as stainless steel, titanium, platinum, gold, niobium, and ruthenium, carbon, and the like. These materials can be appropriately combined.

The first electrode 108 is provided at least on an inner wall (inner circumferential surface) of the pipe 102. The first electrode 108 may be provided on the entire inner wall of the pipe 102 or may be provided on a part thereof. When the first electrode 108 is provided on the part of the inner wall, it may be a partial region in a flow direction of the treated liquid or a partial region in a circumferential direction of the pipe 102. The entire pipe 102 may be made of an insoluble metal or the like, and the entire pipe 102 may constitute the first electrode 108. That is, the first electrode 108 may be provided only on a surface of the inner wall of the pipe 102 or may be provided even inside the inner wall.

The second electrode 110 is provided at least on an outer wall (outer circumferential surface) of the rod-shaped body 112. The second electrode 110 may be provided on the entire outer wall of the rod-shaped body 112 or may be provided on a part thereof. When the second electrode 110 is provided on the part of the outer wall, it may be a partial region in the flow direction of the treated liquid or a partial region in the circumferential direction of the rod-shaped body 112. The entire rod-shaped body 112 may be made of an insoluble metal or the like, and the entire rod-shaped body 112 may constitute the second electrode 110. That is, the second electrode 110 may be provided only on the surface of the outer wall of the rod-shaped body 112 or may be provided even inside the outer wall.

In the first example illustrated in Fig. 2A, the rod-shaped body 112 is a hollow body. The inside of the rod-shaped body 112 is sealed, and the treated liquid does not flow. In the second example illustrated in Fig. 2B, the rod-shaped body 112 is a solid body. By using the hollow or solid rod-shaped body 112 as the second electrode 110, it is possible to suppress an increase in pressure loss when the treated liquid passes through the pipe 102 due to the second electrode 110. On the other hand, in the third example illustrated in Fig. 2C, the rod-shaped body 112 is a cylindrical mesh. The treated liquid can flow back and forth between the inside and the outside of the rod-shaped body 112 through an opening of the mesh while flowing through the pipe 102. By using the rod-shaped body 112 made of the cylindrical mesh as the second electrode 110, a contact area between the second electrode 110 and the treated liquid can be increased, and a treatment rate of impurities by the impurity processing device 100 can be increased.

The power supply 106 causes a current to flow between the first electrode 108 and the second electrode 110. The power supply 106 can include a known DC/DC converter, DC/AC inverter, or the like. For example, the first electrode 108 is connected to a positive output terminal of the power supply 106, and the second electrode 110 is connected to a negative output terminal of the power supply 106. Therefore, the first electrode 108 is a positive electrode, and the second electrode 110 is a negative electrode. Note that the first electrode 108 may be a negative electrode, and the second electrode 110 may be a positive electrode. The current flowing from the power supply 106 may be a direct current or an alternating current. In addition, an amount of current flowing from the power supply 106 is, for example, 0.1 mA or more and 12 mA or less.

By applying a voltage from the power supply 106 to the first electrode 108 and the second electrode 110 and causing a current to flow to the treated liquid to generate an electric field in the pipe 102, metal impurities in the treated liquid can be ionized and miniaturized. The metal impurities contained in the electrode slurry may have a size of about several 100 µm, but can be miniaturized to a size of 10 µm or less by energizing the treated liquid. The present inventors have confirmed that when a current is caused to flow to a treated liquid containing a copper wire as a metal impurity model, the mass of the copper wire linearly decreases with an increase in the amount of electricity, that is, the metal impurities are miniaturized. In addition, it has been confirmed that the metal impurities can be miniaturized even when either a direct current or an alternating current is caused to flow.

In addition, by generating the electric field in the pipe 102 by the power supply 106, the metal impurities can be ionized and electrodeposited on the surface of the first electrode 108 or the second electrode 110. As a result, the metal impurities can be removed from the treated liquid. Note that the direct current is more suitable for miniaturization of the metal impurities, and the alternating current is more suitable for electrodeposition of the metal impurities. Conditions for electrodeposition of the metal impurities on the electrode surface can be appropriately set by those skilled in the art.

By miniaturizing or removing the metal impurities, it is possible to suppress the metal impurities from causing a short circuit between the positive and negative electrodes. In addition, in an electric storage device in which an electrolytic solution is interposed between positive and negative electrodes, when a positive electrode slurry contains metal impurities, the metal impurities may be eluted into the electrolytic solution during charging of the electric storage device, reduced on a surface of the negative electrode, and deposited. When the deposition is repeated, the metal impurities grow in a dendrite shape and pass through a separator to reach the positive electrode, which causes a short circuit. The short circuit caused by the dendrite is more likely to occur when the size of the metal impurity is larger. Therefore, by miniaturizing or removing the metal impurities, the short circuit caused by the dendrite can also be suppressed. Therefore, by applying a current to the treated liquid by the impurity processing device 100, it is possible to remove the metal impurities in the treated liquid, and it is possible to convert the treated liquid into a form in which the performance of the electric storage device is hardly adversely affected even if the metal impurities remain in the treated liquid.

The application of the voltage from the power supply 106 is controlled by a control device 107 as an example. The control device 107 is realized by an element or a circuit such as a CPU or a memory of a computer as a hardware configuration, and is realized by a computer program or the like as a software configuration. Those skilled in the art will understand that these functional blocks can be realized in various forms by combining hardware and software. The control device 107 controls the power supply 106 on the basis of, for example, a value of the current flowing from the power supply 106 and a time for causing the current to flow. In this case, the control device 107 constitutes a part of the impurity processing device 100. Note that on/off of the power supply 106 may be controlled without depending on the control device 107. The control device 107 may control the valve 4 and the pump 8.

As described above, the impurity processing device 100 according to the present embodiment includes the pipe 102 through which the treated liquid containing the metal impurities flows, the first electrode 108 and the second electrode 110 disposed in the pipe 102, and the power supply 106 that causes a current to flow between the first electrode 108 and the second electrode 110. The impurity processing device 100 according to the present embodiment causes a current to flow to the treated liquid to miniaturize or remove the metal impurities, so that even if the impurities are nonmagnetic metals, the impurities can be treated. Therefore, the treatment rate of the impurities can be increased. In addition, since a current flows through the treated liquid flowing through the pipe 102, it is possible to treat the metal impurities while conveying the treated liquid. In addition, the miniaturized metal impurities can be widely dispersed on the flow of the treated liquid.

As an example, the treated liquid is at least one of an electrode slurry containing a solvent and an electrode active material and an electrode slurry containing a solvent and a conductive assistant. The pipe 102 is provided in the coating apparatus 1 including the coating die 2 for applying the treated liquid to the coated material 16 and the tank 6 for storing the treated liquid. As a result, the impurity processing can be performed in the process of conveying the treated liquid from the tank 6 to the coating die 2. Further, by disposing the impurity processing device 100 in the feed pipe 10 or the die supply pipe 14 of the coating apparatus 1, it is possible to perform the impurity processing on the treated liquid until immediately before the treated liquid is applied to the coated material 16. Therefore, according to the impurity processing device 100 of the present embodiment, the performance of an electronic device can be enhanced.

In addition, the impurity processing device 100 can be attached to an existing apparatus only by using a part of a pipe in the apparatus as the pipe 102 or replacing a part of the pipe with the pipe 102 of the impurity processing device 100. Therefore, it is easy to install, replace, and maintain the impurity processing device 100.

In addition, in the impurity processing device 100 of the present embodiment, the first electrode 108 is provided in the pipe 102, and the second electrode 110 is provided in the rod-shaped body 112 inserted into the pipe 102. As a result, the structures of the first electrode 108 and the second electrode 110 can be simplified. The rod-shaped body 112 is a hollow body, a solid body, or a cylindrical mesh. When the rod-shaped body 112 is a hollow body or a solid body, it is possible to suppress an increase in pressure loss when the treated liquid passes through the pipe 102. When the rod-shaped body 112 is a cylindrical mesh, the contact area between the second electrode 110 and the treated liquid can be increased to increase the treatment rate of impurities.

### Second Embodiment

A second embodiment has a configuration common to the first embodiment except for the arrangement of a first electrode 108 and a second electrode 110. Hereinafter, the present embodiment will be described focusing on a configuration different from that of the first embodiment, and the common configuration will be briefly described or description thereof will be omitted.

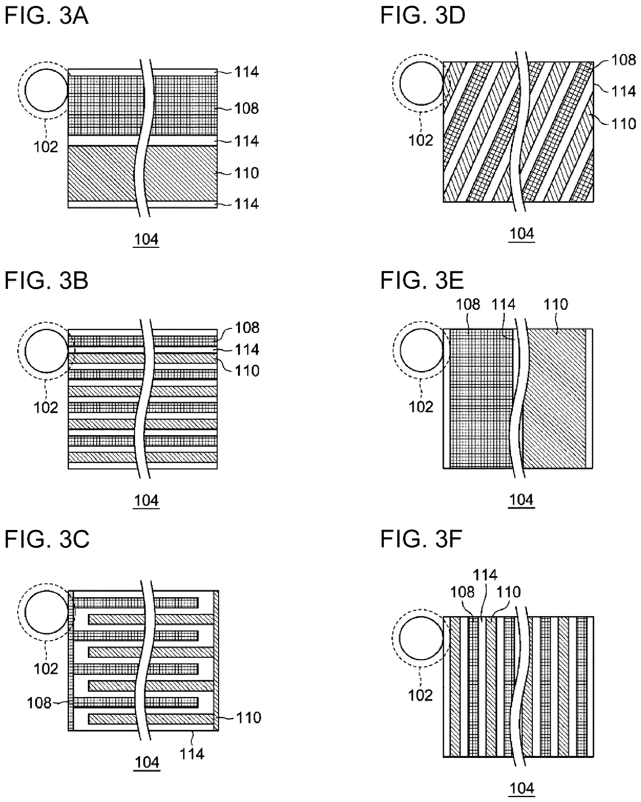

Figs. 3A to 3F are schematic diagrams of an electrode portion 104 included in an impurity processing device 100 according to the second embodiment. Fig. 3A is a fourth example of the electrode portion 104, Fig. 3B is a fifth example of the electrode portion 104, Fig. 3C is a sixth example of the electrode portion 104, Fig. 3D is a seventh example of the electrode portion 104, Fig. 3E is an eighth example of the electrode portion 104, and Fig. 3F is a ninth example of the electrode portion 104. In addition, Figs. 3A to 3F illustrate a state in which an inner wall of a pipe 102 is developed.

In the electrode portion 104 of the present embodiment, the first electrode 108 and the second electrode 110 are provided in the pipe 102. The first electrode 108 and the second electrode 110 are provided at least on the inner wall of the pipe 102. Note that the first electrode 108 and the second electrode 110 may be provided only on a surface of the inner wall of the pipe 102 or may be provided even inside the inner wall. In addition, an insulating portion 114 is provided between the first electrode 108 and the second electrode 110. The first electrode 108 and the second electrode 110 are electrically insulated by the insulating portion 114.

In the fourth example illustrated in Fig. 3A, the first electrode 108 is laid in a region of approximately 1/2 in a circumferential direction on the inner wall of the pipe 102, and the second electrode 110 is laid in the remaining region of approximately 1/2. The first electrode 108 and the second electrode 110 extend in a flow direction of a treated liquid. In the fifth example illustrated in Fig. 3B, a plurality of first electrodes 108 and a plurality of second electrodes 110 extending in the flow direction of the treated liquid are alternately arranged in the circumferential direction of the inner wall of the pipe 102. The fourth example and the fifth example have a structure in which the first electrode 108 and the second electrode 110 are arranged in a stripe shape. In the fifth example, areas of the respective electrodes are small and laying patterns of the respective electrodes are dense, as compared with the fourth example. Therefore, the fifth example can be suitably adopted for the pipe 102 having a larger inner diameter than the fourth example.

In the sixth example illustrated in Fig. 3C, the first electrode 108 and the second electrode 110 have a comb tooth shape and are laid so as to mesh with each other. In the seventh example illustrated in Fig. 3D, the first electrode 108 and the second electrode 110 are laid in a spiral shape.

In the eighth example illustrated in Fig. 3E, the first electrode 108 is laid in a region of approximately 1/2 in the flow direction of the treated liquid on the inner wall of the pipe 102, and the second electrode 110 is laid in the remaining region of approximately 1/2. The first electrode 108 and the second electrode 110 extend in the circumferential direction of the pipe 102. In the ninth example illustrated in Fig. 3F, a plurality of first electrodes 108 and a plurality of second electrodes 110 extending in the circumferential direction of the pipe 102 are alternately arranged in the flow direction of the treated liquid. In the eighth example and the ninth example, the first electrode 108 and the second electrode 110 have a ring shape. In the ninth example, areas of the respective electrodes are small and laying patterns of the respective electrodes are dense, as compared with the eighth example. Therefore, the ninth example can be suitably adopted for the electrode portion 104 which is long in the flow direction of the treated liquid as compared with the eighth example.

The embodiments of the present disclosure have been described above in detail. The above-described embodiments are merely specific examples for carrying out the present disclosure. The contents of the embodiments do not limit the technical scope of the present disclosure, and many design changes such as changes, additions, and deletions of components can be made without departing from the spirit of the present disclosure defined in the claims. A new embodiment to which the design change is made has the effect of the combined embodiment and modifications. In the above-described embodiments, the contents that can be changed in design are emphasized with notations such as "of the present embodiment" and "in the present embodiment", but the design change is allowed even in the contents without such notations. Any combination of the above components is also effective as an aspect of the present disclosure. The hatching applied to the cross sections of the drawings does not limit the material of the hatched target.

The invention according to the above-described embodiment may be specified by an item described below.

### Item 1

An impurity processing method including:
causing a treated liquid containing metal impurities to flow through a pipe (102); and
causing a current to flow to the treated liquid flowing through the pipe (102).

### [REFERENCE SIGNS LIST]

1 coating apparatus, 2 coating die, 6 tank, 16 coated material, 100 impurity processing device, 102 pipe, 106 power supply, 108 first electrode, 110 second electrode, 112 rod-shaped body

## Claims

1. An impurity processing device comprising:
a pipe through which a treated liquid containing metal impurities flows;
a first electrode and a second electrode disposed in the pipe; and
a power supply structured to cause a current to flow between the first electrode and the second electrode.

2. The impurity processing device according to claim 1, wherein
the first electrode is provided in the pipe, and
the second electrode is provided in a rod-shaped body inserted into the pipe.

3. The impurity processing device according to claim 2, wherein
the rod-shaped body is a hollow body, a solid body, or a cylindrical mesh.

4. The impurity processing device according to claim 1, wherein
the first electrode and the second electrode are provided in the pipe.

5. The impurity processing device according to any one of claims 1 to 4, wherein
the treated liquid is at least one of an electrode slurry containing a solvent and an electrode active material and an electrode slurry containing a solvent and a conductive assistant.

6. The impurity processing device according to any one of claims 1 to 5, wherein
the pipe is provided in a coating apparatus including a coating die for applying the treated liquid to a coated material and a tank for storing the treated liquid.

7. An impurity processing method comprising:
causing a treated liquid containing metal impurities to flow through a pipe; and
causing a current to flow to the treated liquid flowing through the pipe.
